# EUROPEAN PATENT APPLICATION

(11) **EP 1 361 697 A2**
(43) Date of publication of application: **12.11.2003**
(21) Application number: 02293096.0
(22) Date of filing: 13.12.2002
(51) Int. Cl.: H04L 12/24

(54) **Network management system architecture**

(30) Priority: 19.12.2001 US 21080
(71) Applicant: Alcatel Canada Inc., Ottawa, Ontario K2K 2E6 (CA)
(72) Inventor: Best, Michael, Ottawa, Ontario K1S 1R2 (CA); Mann, Robert Alexander, Carp, Ontrio K0A 1L0 (CA); Abu-Hamdeh, Rateb, Kanata, Ontario K2L 3W9 (CA); D'Entremont, Jules Robert, Nepean, Ontario K2G 5S9 (CA); Jorgensen, Peter Kaj, Nepean, Ontario K2G 4L1 (CA); Sadasivan, Ashok, Ottawa, Ontario K1G 0E7 (CA); Ensing, Karen, Carp, Ontario K0A 1L0 (CA); Holierhoek, Hubert, Kinburn, Ontario K0A 2H0 (CA)
(74) Representative: Feray, Valérie

(57) **Abstract**

A new architecture for deploying network management and service provisioning solutions is provided. The new architecture includes the provision of a framework implementing a software development methodology for coding complex software applications relating to network management and service provisioning. The software development methodology results in software application code that is easy to: understand, debug, extend, test, and deploy while still being efficient when used in real time. The methodology includes the coding, compiling and linking of a single managed object class. The managed object class is used to model and represent different data network entities in accordance with attributes held therein. The methodology further makes use of a network management and service provisioning specific grammar used by a parser associated with the framework to read a body of attribute files associated with the data network entities. Data network management and service provisioning solutions are enabled via network management and service provisioning enabling technologies. The interpretation of the contents of the attribute files is performed by hierarchical lexical analyzer which when encountering an enabling technology specific directive, the directive is interpreted by a corresponding enabling technology specific lexical analyzer stub. The advantages provided by the software development methodology are derived from application code that is easy to: understand, debug, extend, test, and deploy while still being efficient when used in real time.

## Description

The invention relates to management and provisioning of data networks, and in particular to methods of providing data network management and provisioning solutions.

In the field of data network management, data transport networks are made up of a collection of managed data transport equipment. Data services are provisioned over the managed data transport equipment.

In a competitive market place, due to a recent explosive technological development, the network management and service provisioning task is complicated by many factors including: multiple data network equipment vendors having multiple approaches in implementing the data network equipment; a multitude of data transport technologies, with each vendor specializing in a sub-group of the multitude of data transport technologies; a multitude of network management and service provisioning protocols, with each vendor implementing only a sub-group of the multitude of network management and service provisioning protocols; a multitude of auxiliary network management and service provisioning equipment employing yet another multitude of network management and service provisioning technologies; etc.

Data transport equipment includes, but is not limited to: data switching equipment, routers, bridges, access nodes providing a multiplexing function, Remote Access Servers (RAS), distribution nodes providing a demultiplexing function, Customer Premise Equipment (CPE), etc. with rext generation data transport equipment in development.

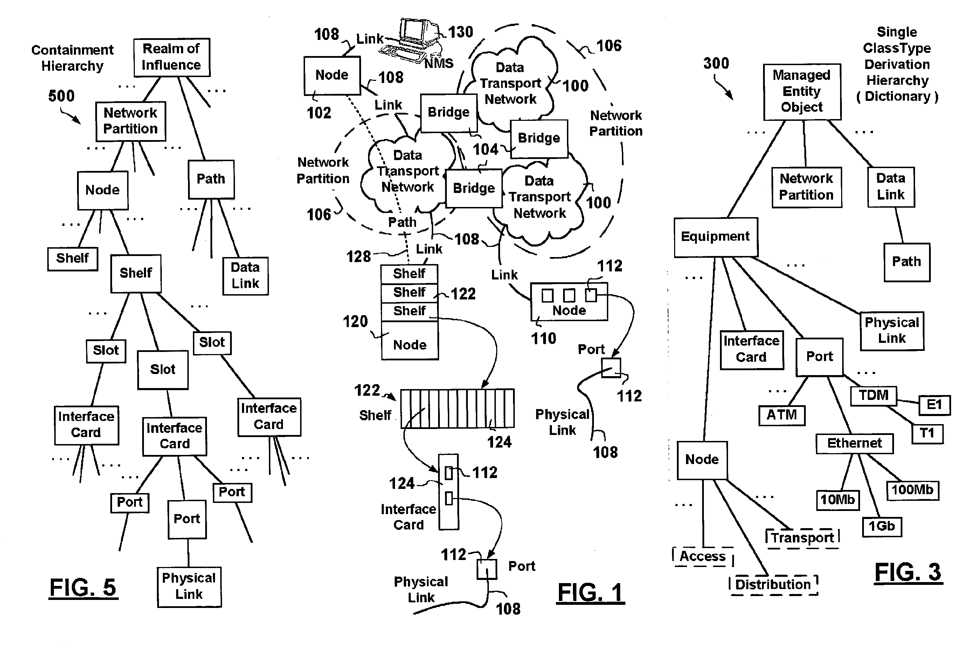

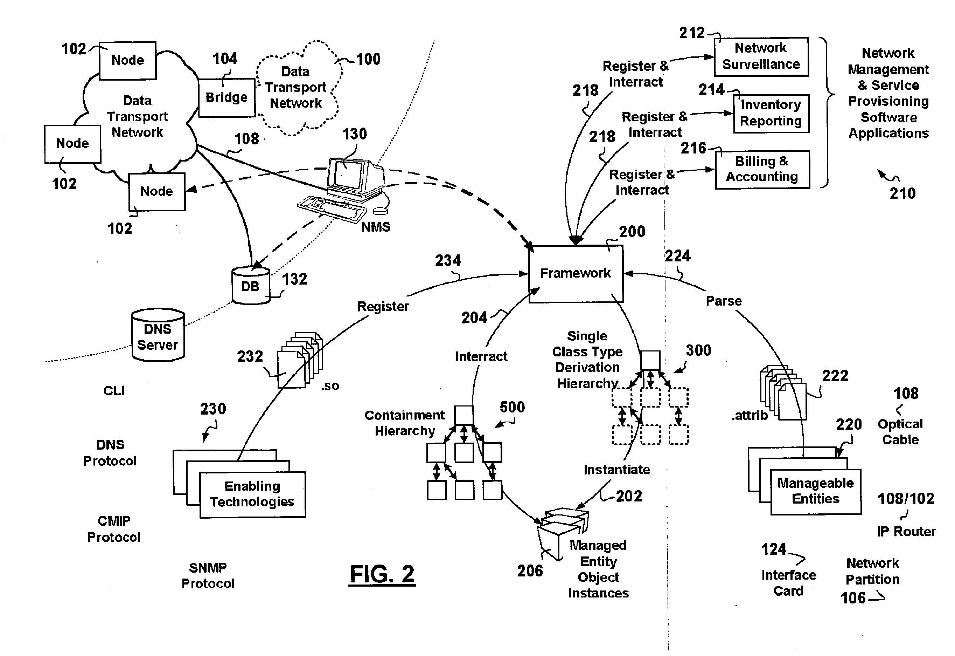

With regards to data network equipment, for example data switching nodes schematically shown in FIG. 1, a vendor may chose to implement an integral device 110 having a data switching processor and a group of ports 112, while another vendor may chose a customizable implementation of a data switching node 120 including: a switching fabric, an equipment rack divided into shelves, each shelf 122 having slot connectors for connection to interface cards, each interface card 124 having at least one port 112. Although conceptually the two the data switching nodes 110 and 120 provide the same data switching function, each implementation is adapted for a different environment: the former data switching node 110 is more adapted to enterprise solutions as a private data network node, perhaps further adapted to enable access to public data services; while the latter data switching node 120 is better adapted for high data throughput in the core of public data transport networks. Typically the former (110) implements a small number of data transport protocols while for the latter (120), data transport protocols are implemented on interface cards 124 and/or ports 112 - providing for a flexible deployment thereof.

Data transport technologies include: electrical transmission of data via copper pairs, coaxial cable, etc: optical transmission of data via optical cables; free space optical interconnects, etc.; wireless transmission of data via radio modems, microwave links, wireless Local Area Networking (LAN), etc.; with next generation data transport technologies under development.

Data transport protocols used to convey data between data transport equipment includes: Internet Protocol (IP), Ethernet technologies, Token-Ring technologies, Fiber Distributed Data Interface (FDDI), Asynchronous Transmission Mode (ATM), Synchronous Optical NETwork (SONET) transmission protocol, Frame Relay (FR), X-25, Time Division Multiplexing (TDM) transmission protocol, Packet-Over-SONET (POS), Multi-Protocol Label Switching (MPLS), etc. with next generation data transport protocols in development.

The physical data network equipment alluded to above is part of larger body of managed data network entities enabling the provision of data services. The data network entities also include, but are not limited to: logical ports, logical interfaces, end-to-end data links, paths, virtual circuits, virtual paths, etc.

Network management and service provisioning enabling technologies include, but are not limited to protocols: Simple Network Management Protocol (SNMP), Common Management Information Protocol (CMIP) etc.; as well as devices: special function servers, centralized databases, distributed databases, relational databases, directories, network management systems (NMS), etc. with next generation devices and technologies under development.

Network management and service provisioning solutions include Network Management Systems (NMS) enabled via special purpose software applications coded to configure and control the above mentioned data network entities. Such software applications include, but are not limited to: inventory reporting, configuration management, statistics gathering, performance reporting, fault management, network surveillance, service provisioning, billing & accounting, security enforcement, etc.

It is a daunting task to provide network management and service provisioning solutions taking into account the permutations and combinations of the elements presented above. Prior art approaches to providing network management and service provisioning solutions includes the coding of hundreds of software applications with knowledge of hundreds of data networking entities using tens of data transmission and network management protocols.

Coding, deploying, maintaining, and extending such software applications for network management and service provisioning has been and continues to be an enormous undertaking as well as an extremely complex procedure. Such software applications require a large number of man-hours to create, frequently are delivered with numerous problems, and are difficult to modify and/or support. The difficulty in creating and supporting large applications is primarily due to the inability of existing software development paradigms to provide a simplification of the software development process. In accordance with current coding paradigms, the complexity of the software applications has been shown to increase as an exponential function of the number of different operations that are expected to be performed. Large programming efforts suffer in terms of reasonable performance, reliability, cost of development, and reasonable development cycles.

Object Oriented Programming (OOP) attempts to improve productivity whenever a problem can be simplified by decomposing it into a set of black-box objects. Object oriented programming depends heavily upon the benefits of data hiding, inheritance, and polymorphism to simplify software design. If a network management and service provisioning solution cannot be subdivided into objects, object oriented programming does not offer significant productivity improvements. Moreover, heavy reliance on object oriented programming to achieve compact code intending to reduce the size of software applications and perhaps development time, suffers from deeply nested function calls which creates a processing overhead leading to inefficient code. Deep nesting of function calls obscures the implementation paradigms used; thereby negatively impacting code debugging, code maintenance, and further development thereof.

Prior art efforts including: Preside™ by Nortel Networks Corp., IP Manager™ by Cisco Systems Inc., OneVision Management System™ by Lucent Technologies Inc., NetProvision Activator by Syndesis Limited, Resolve 2.1 by Orchestream Holdings Plc., and others, capture the properties, associations, relationships, functionality and management of data network entities in class definitions, as well as methods of interaction with network management and service provisioning devices using specific network management and service provisioning technologies. These efforts are all laudable but at the same time are subject to all of the above mentioned factors making it difficult to improve productivity in the development and maintenance of such complex software applications for network management and service provisioning.

A prior art United States Patent 5,491,796 entitled "APPARATUS FOR REMOTELY MANAGING DIVERSE INFORMATION NETWORK RESOURCES" which issued on February 13, 1996 to Wanderer et al. describes a method of coding and organizing software application code into compilable device specification files to map an object oriented software application architecture to a relational database which only provides a very specific implementation for a specific remote management system. Although inventive, the coded routines in the device specification files, just as the prior art methods described above, capture the properties, associations, relationships, functionality and management of data network entities in class definitions, as well as methods of interaction with network management and service provisioning devices using specific network management and service provisioning technologies. The resulting solution is still provided via large monolithic software applications without support for persistent storage.

One object of the present invention is to provide improved methods of software application code development and maintenance taking into account the above mentioned complexities.

More precisely, the invention provides a network management and service provisioning environment comprising a framework. The framework includes: an implementation of a single managed entity object class, a plug-in registry, a parser, a generic lexical analyzer, and an interpreter. The single managed entity object class is run-time derivable via type derivation into a hierarchy of managed entity object types minimizing the need to re-code and re-compile framework software application code in support of new managed entity object types. The registry registers at run-time at least one plug-in brokering access to network management and service provisioning enabling technologies. The parser processes at least one self-contained managed data network entity specification. The generic lexical analyzer interprets at least one directive. The interpreter processes messages received from at least one network management and service provisioning software application. A separation is provided between managed entities, enabling technologies and software applications. The separation enables independent development, maintenance and troubleshooting in providing network management and service provisioning solutions.

In accordance with another aspect of the invention a network management and service provisioning apparatus using the framework is also provided.

In accordance with yet another aspect of the invention, a method of providing a network management and service provisioning solution is presented. The method comprises a sequence of steps. At least one plug-in brokering access to at least one network management and service provisioning enabling technology is registering with a framework providing the network management and service provisioning solution. At least one managed data network entity specification loaded by the framework is parsed. A single managed entity object class is derived into a managed object type hierarchy via type derivation. And, at least one message received by the framework from at least one network management and service provisioning software application is processed. The framework acts as an enabler separating managed data network entities, enabling technologies and software applications, as well as a facilitator therebetween in providing the network management and service provisioning solution.

The advantages are derived from an improved ability to add new functionality in support of improved network management and service provisioning solutions to support new data network entities. This improved ability comes from a reduction in the development effort required to achieve these objectives. The development effort is reduced because the work required in developing and/or updating part of the network management and service provisioning solution is isolated. This provides improved ability for developers to work independently simplifying verification efforts and reducing regression testing efforts. The independent maintenance and development of code provides an improved ability to develop and troubleshoot new functionality in parallel.

The features and advantages of the invention will become more apparent from the following detailed description of the preferred embodiments with reference to the attached diagrams wherein:
FIG. 1 shows a schematic diagram showing data network elements implementing connected data transport networks;
FIG. 2 shows a schematic diagram showing elements implementing a network management and service provisioning solution in accordance with a preferred embodiment of the invention;
FIG. 3 shows a schematic diagram showing a managed entity object hierarchy used in providing the network management and service provisioning solution in accordance with the preferred embodiment of the invention;
FIG. 4 shows a flow diagram showing steps of an interworking process facilitated by the framework in accordance with an exemplary implementation of the invention;
FIG. 5 shows a schematic diagram showing an managed entity containment hierarchy used in providing the network management and service provisioning solution in accordance with the preferred embodiment of the invention; and
FIG. 6 shows a schematic diagram showing the framework facilitating the interaction between interworking software applications, persistence plug-ins and managed object type instances in accordance with the preferred embodiment of the invention.

It will be noted that in the attached diagrams like features bear similar labels.

FIG. 1 is a schematic diagram showing data network elements implementing connected data transport networks.

Data network nodes 102, 110, 120 are physically interconnected in the data transport network 100 via physical links 108. Data transport networks 100 may be bridged via bridge data network nodes 104 to enable data exchange therebetween. Connected data transport networks 100 can be grouped defining areas of focus and influence for the purposes of network management and service provisioning, known as network partitions 106.

Physical links 108 provide Open Systems Interconnection (OSI) Layer-1 connectivity between data network nodes 102/104/110/120 physically conveying data for OSI Layer-2 data links between nodes 102/110/120 end-to-end. A Layer-2 data link may be provisioned over at least one physical data link 108 - the sequence of physical data links 108 used representing an OSI Layer-3 path 128.

Network management and service provisioning is typically performed with the aid of at least one Network Management System (NMS) 130 connected to at least one node 102 associated with a data transport network 100.

FIG. 2 is a schematic diagram showing elements implementing a network management and service provisioning solution.

In accordance with a preferred embodiment of the invention, a framework 200 is provided. The framework 200 is a combination of hardware and software object code. The framework 200 facilitates the implementation of a software development methodology for coding complex software applications 210 relating to network management and service provisioning.

The framework 200 implements a new architecture for providing network management and service provisioning solutions. The new architecture categorizes the above presented elements into:
- Manageable data network entities 220 representative of field installed physical and logical managed data network entities to be configured and controlled in providing network management and service provisioning solutions. The managed entities include:
   i. Physical data network equipment installed in the field such as: nodes 102/104, routers, switches, hubs, OC-3 links 108, etc., and
   it. Logical data network entities associated with data network equipment installed in the field such as: network partitions 106, paths 128, virtual circuits, virtual routers etc.;
- Network management and service provisioning software applications 210 used to configure and control the manageable data network entities 220. The software applications 210 include as mentioned above: inventory reporting 214, configuration management, statistics gathering, performance reporting, fault management, network surveillance 212, service provisioning, billing & accounting 216, security enforcement, etc.;
- Network management enabling technologies 230 providing interaction between the manageable entities 220 and, logical and field installed physical managed data network entities. Enabling technologies 230 include:
   **i.** Data network management and service provisioning protocols: SNMP, CMIP, CLI, DNS, etc., and
   ii. Data network management and service provisioning devices: databases, DNS servers, etc.

The interaction may be command driven as specified by the software application 210, as well as event driven as a current state of the managed data transport network(s) in the realm of management changes.

The enabling technologies 230 include support for a concept termed "persistence". Each data network entity including data network equipment has an associated group of parameters. These parameters either have an effect on the operation of the data network entity or label the data network entity. The persistence concept encompasses the storage of, access to, reading, writing, modifying, synchronization/reconciliation, etc. of persistence parameters to control the operation of data network entities.

The persistence parameters can be stored in a network management and service provisioning database 132, as well as in registers associated with the managed physical data network equipment installed in the field. The persistence access to, reading of, writing of, modification of these parameters is provided via the data network management and service provisioning protocols mentioned above. Persistence reconciliation and synchronization is performed between a persistence database and a persistence value held in a volatile register ensuring a correct record keeping thereof, fast access to the persisted information and backup thereof. Distributed storage of persistence information is also used in reconfiguring data network equipment subsequent to network failures.

The persistence concept also encompasses special persistence types such as: constant persistence which can only be initialized but not modified or written to subsequently; as well as derived persistence which is not stored but rather calculated from other persistence values when needed.

In accordance with the preferred embodiment of the invention, coding techniques used in support of the preferred software development methodology enable on-demand loading of persistence entity specific object code. These coding techniques implement what are known in the art as software application plug-ins such as, but not limited to: SNMP plug-ins, CMIP plug-ins, CLI plug-ins, database plug-ins, etc. The persistence entity plug-ins are provided as shared object code library (.so) files 232 which register 234 with the framework 200 for on-demand loading thereof. The persistence plug-ins 232 capture data and methods necessary to interact with actual persistence entities (databases, registers, etc.) Each persistence plug-in shared library (.so) file 232 contains a coded description of the functionality it is capable to provide.

In accordance with the preferred embodiment of the invention, the persistence plug-ins 232 are coded in a general fashion without making special reference to the manageable data network entities 220 or the software applications 210. In particular, although provided via shared library object code (.so) files 232, the persistence plug-ins are not to be linked-in with the software application 210 object code but rather registered 234 with the framework 200 exclusively.

In accordance with the preferred embodiment of the invention, the software applications 210 are also coded in a general fashion implementing the functionality provided while only making reference to manageable data network entities 220 via directives in a high level abstract implementation of the functionality provided.

Specific information regarding manageable data network entities 220 is held by the framework 200 which instantiates 202, at run-time, and provides interaction 204 with, instances of managed object entities 206. In particular, the software applications 210 register 218 with the framework 200 which augments the functionality thereof in providing access to instances 206 of specific manageable entities 220 and methods associated therewith.

FIG. 3 is a schematic diagram showing a managed entity object hierarchy used in providing a network management and service provisioning solution.

In accordance with the preferred embodiment of the invention, a single abstract managed entity class is implemented in the framework 200 to model all manageable data network entities 220. The single managed entity class is used via type derivation to define a single-class type derivation hierarchy 300 of concrete manageable object types. The single-class modeling of the manageable entities 220 provides for a flexible implementation of network management and service provisioning solutions without the need to re-code and re-compile the framework 200 application code and the software application 210 to support newly added manageable data network entities 220 as these are developed.

The derivation of the abstract single managed entity class into the single-class type derivation hierarchy 300 is preferably enabled by coding the abstract single managed entity class to be defined by a group of associated attributes. A human readable attribute file 222 is provided for each manageable data network entity type 220.

In accordance with the invention, each human readable attribute file 222 gathers the particulars of a corresponding managed entity object type including the managed entity object type inheritance and persistency needs specifications thereof in a self contained manner.

In deriving a managed entity object type from the single managed entity class, each attribute file 222 makes use of an "entity" directive specifying the inheritance. For example the human readable directive:
entity [ abstract | concrete ] node : equipment
is used, where the "node" managed entity object type is derived from the "equipment" managed entity object type described perhaps in another attribute file 222. A facility may be provided for specifying whether the derived managed entity object type represents an abstract or concrete object type.

In setting attributes the following directive is used:
attr [constant] x : int
specifying the specific attribute "x" and the attribute's data type "integer". A facility may be provided for initializing the attribute to an initial value. Another facility may be provided for specifying whether the attribute is constant or not. The persistency synchronization functionality is not coded in the abstract manageable entity class definition but rather specified via specific directives in attribute files 222.

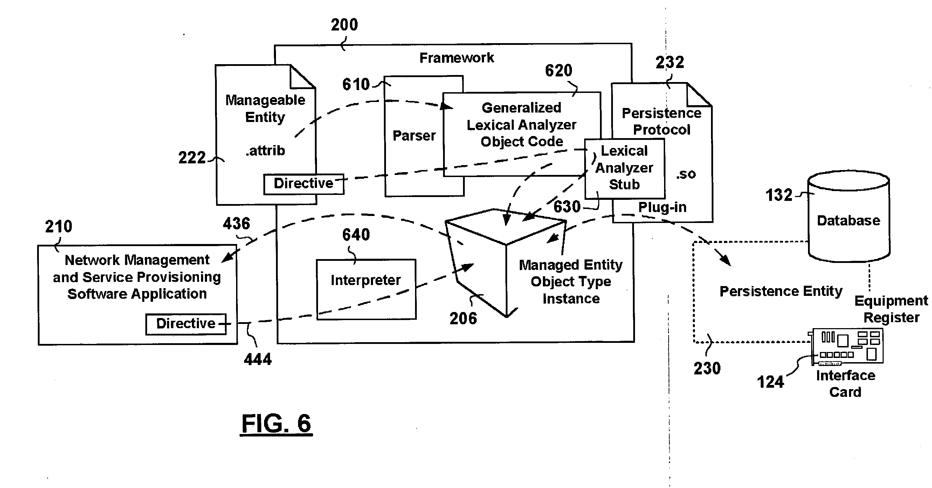

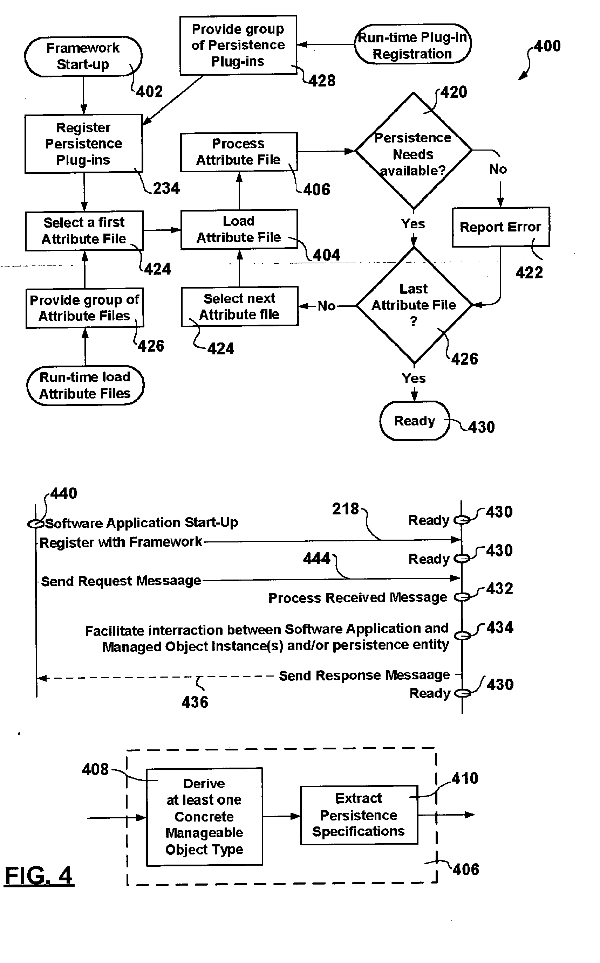

The directives described above define a grammar, further details with respect to the preferred grammar implementation used will be presented below with respect to Fig. 6.

Fig. 4 is a flow diagram showing, in accordance with an exemplary implementation of the invention, steps of an interworking process 400 facilitated by the framework 200.

On start-up 402, the framework 200 loads-up the shared library (.so) files 232 registering 234 the persistence plug-ins 230. The attribute files 222 are also loaded-up 404 and processed 406 by the framework 200.

The attribute files 222 and the .so files 232 may be stored in pre-specified locations known to the framework 200. Facilities may be provided for run-time loading 404 and processing 406 of a group (426) of the attribute files 222 as well as the loading and registration 234 of a group (428) of shared library (.so) files 232.

In processing 406 an attribute file 222, a corresponding managed object type (300) is derived 408, the persistency needs of the derived managed entity object type are extracted 410 from the attribute file 222. The framework 200 thereupon interrogates 420 the registered persistence plug-ins 230 to find at least one registered shared library 232 that fulfills the persistence needs of the derived managed entity object type (300) specified in the attribute file 222.

If a persistence plug-in 230 cannot be found in step 420 to fulfill the specification in the attribute file 222, an error is reported in step 422 and the process resumes from step 426.

If the persistence needs of the derived managed object type (300) are met as specified in the corresponding attribute file 222, the process continues with selecting 424 and loading 404 another attribute file 222 if not all attribute files 222 have been loaded (426).

When all of the attribute files 222 have been loaded-up 404 and processed 406, the framework 200 is in a state ready 430 to provide the interworking function for the software applications 210.

Each software application 210, upon start-up 440 thereof, registers 218 with the framework 200 to participate in a distributed computing environment.

Each software application 210 preferably sends request messages 444 to the framework 200. The framework 200, processes 432 the received messages 444, facilitates 434 the interaction between the software applications 210, and managed object type instances 206. The interaction typically also generates response messages 436 sent to the software applications 210.

In accordance with the preferred embodiment of the invention, the interaction between the software applications 210 and the managed object type instances 206, changes the data network state and/or provides an update of the data network state by making use of the enabling technologies 230. The instantiation of the managed object types (300) is performed subsequent to the discovery of physical managed entities in the realm of influence of the network management and service provisioning solution. The discovery of physical managed entities is provided via software applications 210 such as the inventory reporting software application 214. The instantiation of managed entity object types may also be a result of the interaction of an analyst with the NMS 130 via the software applications 210. The instantiated manageable entity object types define a managed object type containment hierarchy 500 presented in Fig 5.

In accordance with the preferred embodiment of the invention, the manageable entities 220 and persistence plug-ins 230 are therefore separated. The framework 200 serves as an enabler to keep these elements independent, as well as a facilitator to make them interact at run-time whenever the software applications 210 require it.

In facilitating the above mentioned interaction between managed entity object type instances 206 and persistence plug-ins 230, a special purpose run-time interpreted multi-level language is used.

Fig 6 is a schematic diagram showing, in accordance with the preferred embodiment of the invention, the framework 200 facilitating the interaction between interworking software applications 210, persistence plug-ins 230 and managed object type instances 206.

In accordance with the preferred embodiment of the invention, the attribute files 222 are parsed to lexically analyze directives specified therein. The framework 200 is provided with a generic lexicon analyzer 620 for interpreting directives. Besides deriving 408 manageable entity object types (300) and specifying attributes, the directives are also used for specifying sequences of combinations of methods in performing operations on persistence parameters. A parser 610 is used for processing 406 attribute files 222.

In accordance with the preferred embodiment of the invention, a new grammar is introduced. The grammar enables the description of the persistency needs of a managed entity object type in a corresponding attribute file 222. The grammar is interpreted by the generic lexical analyzer 620 associated with the framework 200.

Further, the grammar enables access to the capabilities provided in a persistence plug-ins 230. Special purpose lexical analyzer stubs 630 specific to each particular persistence plug-in 232 are also provided to implement the multilevel language used. Depending on an implementation used, each special purpose lexical analyzer 630 may be coded in the corresponding persistence plug-in share library (.so) file 232 or coded separately and registered with the framework 200 via a separated shared library (.so) file 232. With the lexical analyzer stub 630 provided separately, the initial registration of corresponding persistence plug-ins 230 may include only the loading-up of the lexical analyzer stub 630; the remainder of the persistence plug-in 230 being only loaded-up on a need to use basis.

For example, each managed entity object type (300) may require particular functionality provided via the use of a persistence plug-in 230 such as is the case, for example, in using the SNMP protocol to convey information. The corresponding attribute file 222 for the managed entity object type would include a directive such as:
in SNMP { <command set> }
where the <command set> includes specific commands i.e. a sequence of procedural steps to be used. The directive is interpreted by a lexical analyzer stub 630 associated with the SNMP persistence plug-in 230. In broad terms the directive for the framework 200 would have the following meaning: "For I, the managed entity object type having the function described herein, when intended to be communicated with employing the SNMP protocol the procedure to be followed is specified in as follows: <command set>". Additional directives are specified for each needed persistence plug-in 230. It is emphasized that the directive is intended for the framework 200, although the framework 200 itself would use the higher level lexical analyzer stub 630 provided via shared library (.so) files 232 associated with the corresponding persistence plug-in 230 to interpret the <command set>.

In accordance with the invention, the request messages 444 exchanged between the software applications 210 and the framework 200 are interpreted by an interpreter 640 associated with the framework 200 rather than making specific reference to manageable data network entities 220 or persistence plug-ins 230. Further details are provided in co-pending U.S. Patent Application bearing Attorney Docket Number 12560-US filed on even date entitled "METHODS OF INVOKING POLYMORPHIC OPERATIONS IN A STATISTICALLY TYPED LANGUAGE" which is incorporated herein by reference.

In accordance with the preferred embodiment of the invention, the network management and service provisioning solution componentized to enable independent development, maintenance and troubleshooting of the software application 210 code, code associated with enabling technologies, as well as independent development, management, troubleshooting and deployment of new manageable data network entities 220.

The framework 200 therefore performs a facilitation function: each managed entity object type and persistence plug-in loaded-up by the framework 200 parsed and/or registered independently. The independence between manageable data network entities 220 and persistence plug-ins 230 eliminates code interdependency therebetween and provides a run-time adaptable and extensible network management and service provisioning solution. There is no necessity to re-link and/or re-compile the framework 200 and/or software application 230 code to support new manageable data network entities 220 while the real-time operational performance is not detrimentally affected thereby streamlining software application implementation, deployment and maintenance. Therefore, the process of coding complex software applications is greatly simplified and streamlined, resulting in increased productivity.

The software development methodology described herein provide for a dynamic addition of manageable data network entities 220 via human-readable attribute files 222. The attribute files 222 may be modified or augmented, in parallel, to modify and/or augment the operation of the software applications 210. The software development methodology results in software application code that is easy to: understand, debug, extend, test, and deploy while still being efficient when used in real time.

The embodiments presented are exemplary only and persons skilled in the art would appreciate that variations to the above described embodiments may be made without departing from the spirit of the invention. The scope of the invention is solely defined by the appended claims.

## Claims

1. Network management and service provisioning environment comprising a framework, the framework including:
**a.** an implementation of a single managed entity object class, the single managed entity object class being run-time derivable via type derivation into a hierarchy of managed entity object types minimizing the need to re-code and re-compile framework software application code in support of new managed entity object types;
**b.** a registry for run-time registration of at least one plug-in brokering access to network management and service provisioning enabling technologies;
**c.** a parser for processing at least one self-contained managed data network entity specification;
**d.** a generic lexical analyzer interpreting at least one directive; and
**e.** an interpreter for processing messages received from at least one network management and service provisioning software application
wherein a separation is achieved between managed entities, enabling technologies and software applications, the separation enabling independent development, maintenance and troubleshooting in providing network management and service provisioning solutions.

2. Environment as claimed in claim 1, wherein the single managed object class is an abstract managed object class.

3. Environment as claimed in claim 1 or claim 2, wherein the derivation of the managed entity object type hierarchy includes the specification of at least one attribute.

4. Environment as claimed in any one of daims 1 to 3, wherein the at least one self contained managed data network entity specification includes a human readable file.

5. Environment as claimed in claim 4, wherein the human readable file is an attribute file holding attributes corresponding to a single managed entity object type.

6. Environment as claimed in any one of claims 1 to 5, wherein the at least one directive includes an attribute specification.

7. Environment as claimed in claim 6, wherein the attribute specification further specifies managed entity object type inheritance.

8. Environment as claimed in any one of claims 1 to 7, wherein the network management and service provisioning enabling technologies include support for at least one of a persistence method and a persistence entity.

9. Environment as claimed in any one of claims 1 to 8, wherein the at least one directive further specifies a command sequence to be followed in using a specific registered enabling technology.

10. Environment as claimed in claim 9, wherein the framework further comprises at least one registered enabling technology specific lexical analyzer stub for interpreting at least one enabling technology specific directive.

11. Network management and service provisioning apparatus implementing the network management and service provisioning environment claimed in claim 1.

12. Method of providing a network management and service provisioning solution comprising steps of:
**a.** registering with a framework at least one plug-in brokering access to at least one network management and service provisioning enabling technology;
**b.** parsing at least one managed data network entity specification loaded by the framework;
**c.** deriving a single managed entity object class into a managed object type hierarchy via type derivation; and
**d.** processing at least one message received by the framework from at least one network management and service provisioning software application;
wherein framework acts as an enabler by separating managed data network entities, enabling technologies and software applications, as well as a facilitator therebetween in providing the network management and service provisioning solution.

13. Method as claimed in claim 12, wherein processing the at least one message received by the framework, the method comprises a further step of deriving a containment hierarchy of managed entity object type instances corresponding to field installed data network equipment.

14. Method as claimed in claim 12 or claim 13, wherein registering with the framework at least one plug-in, the method further comprises a step of run-time registering the at least one plug-in.

15. Method as claimed in claim 14, wherein run-time registering the at least one plug-in, the method further comprises a prior step of: selecting the at least one plug-in for registration thereof.

16. Method as claimed in any one of claims 12 to 15, wherein parsing the at least one managed data network entity specification loaded by the framework, the method further comprises a step of: run-time loading the at least one managed data network entity specification.

17. Method as claimed in claim 16, wherein run-time loading the at least one managed data network entity specification, the method further comprises a prior step of: selecting the at least one managed data network entity specification.

18. Method as claimed in any one of claims 12 to 17, wherein parsing, the method further comprises a step of: extracting at least one directive therefrom, the at least one managed data network entity specification being associated with at least one managed entity object type.

19. Method as claimed in any one of claims 12 to 18, wherein deriving a single managed entity object class via type derivation, the method further comprises a step of setting at least one attribute.

20. Method as claimed in any one of claims 12 to 19, wherein prior to processing the at least one message received by the framework from the at least one software application, the method further comprises a step of: registering the at least one software application with the framework.

21. Method as claimed in any one of claims 12 to 20, wherein processing the at least one message received by the framework; the method further comprises a step of: implementing a directive specified in the at least one managed data network entity specification using a lexical analyzer stub associated with the at least one plug-in.

22. Method as claimed in claim 21, wherein implementing the directive, the method further comprises a step of: instantiating managed entity object types.

23. Method as claimed in claim 21 or claim 22, wherein implementing the directive the method further comprises a step of: effecting a change in a network state of a managed data transport network in a realm of management.

24. Method as claimed in any one of claims 12 to 23, wherein subsequent to processing the at least one message received by the framework; the method further comprises a step of: sending a message to the software application.
